# EUROPÄISCHE PATENTSCHRIFT

(11) **EP 2 793 031 B1**
(45) Veröffentlichungstag und Bekanntmachung des Hinweises auf die Patenterteilung: **05.01.2022**
(21) Anmeldenummer: 13163652.4
(22) Anmeldetag: 15.04.2013
(51) Int. Cl.: G01N 35/10

(54) **Pipettiersystem für ein Analysegerät**
Pipetting system for an analyser
Système de pipetage pour un appareil d'analyse

(43) Veröffentlichungstag der Anmeldung: 22.10.2014
(73) Patentinhaber: Siemens Healthcare Diagnostics Products GmbH, 35041 Marburg (DE)
(72) Erfinder: Wiedekind-Klein, Alexander, 61449 Steinbach (DE); Ziechner, Eike, 61273 Wehrheim (DE)

(56) Entgegenhaltungen:
- WO-A2-2012/119118
- DE-A1-102004 025 588
- US-A- 5 032 361
- US-B1- 6 360 794
- None

## Beschreibung

Die Erfindung liegt auf dem Gebiet der automatischen Analysegeräte und betrifft ein Pipettiersystem für ein automatisches Analysegerät, umfassend eine Pipettiernadel, welche selbstrückstellend beweglich an einem Transferarm angeordnet ist, und ein Bewegungsmesssystem.

Zahlreiche Nachweis- und Analyseverfahren zur Bestimmung physiologischer Parameter in Körperflüssigkeitsproben oder anderer Parameter in anderen biologischen Proben werden heute automatisiert in großer Anzahl in entsprechenden automatischen Analysegeräten durchgeführt. Im Bereich der Labordiagnostik werden die zu analysierenden Körperflüssigkeitsproben, wie Blut, Plasma, Serum oder Urin, in verschlossenen Probengefäßen zur Verfügung gestellt. Die Probengefäße werden dem Analysegerät einzeln oder gruppenweise in geeigneten Gestellen angeordnet zugeführt. Üblicherweise werden die Probengefäße mittels eines Transportsystems zunächst an einer Identifikationseinrichtung vorbeigeführt, die Informationen zur Identität der Probe, die auf dem Probengefäß angebracht sind, z.B. in Form eines Barcodes, liest und an eine Speichereinheit weiterleitet. Sodann wird jedem Probengefäß ein Aliquot der Probenflüssigkeit entnommen und in ein Reaktionsgefäß transferiert, in welchem dann das analytische Testverfahren durchgeführt wird.

Um eine Vielzahl von Untersuchungen automatisiert durchführen zu können, ist es an einer Vielzahl von Stellen erforderlich, durch automatisiertes Pipettieren kleine Flüssigkeitsmengen aus den entsprechenden Behältnissen zu entnehmen. So müssen beispielsweise Aliquots der Probe aus den Probengefäßen oder genau vorgegebene Teilmengen von Reagenzien aus den Reagenzbehältern entnommen und in das für die jeweilige Untersuchung bestimmte Reaktionsgefäß transferiert werden. Hierfür sind je nach Einsatzzweck mehrere entsprechende Pipettiersysteme in einem automatischen Analysegerät vorgesehen.

Ein Pipettiersystem weist eine Pipettiernadel auf, die an einem aktiv bewegbaren Element wie z.B. an einem Transportarm befestigt ist. Die Pipettiernadel ist als Hohlnadel ausgestaltet, die durch Druck oder Unterdruck betrieben definierte Probenmengen entnehmen kann. Die Pipettiernadel wird entlang der Mittelachse des jeweiligen Gefäßes eingeführt, durchsticht bei verschlossenen Gefäßen gegebenenfalls einen elastischen Verschlussstopfen und wird in die Flüssigkeit eingetaucht. Das Eintauchen wird mittels eines entsprechenden Sensors registriert und die vorgegebene Menge druckgesteuert eingesaugt. Die entnommene Menge wird dann der entsprechenden Analyse zugeführt. Anschließend wird die Pipettiernadel in einer entsprechenden Einrichtung gespült und ist für den nächsten Einsatz bereit.

Kommt es während des Betriebs des Pipettiersystems zu einem Fehler hinsichtlich der Positionierung der Pipettiernadel, beispielsweise auf Grund einer fehlerhaften Justage oder einer Fehlfunktion des Pipettiersystems oder der die entsprechenden Gefäße zuführenden Einrichtung, kann es zu unvorhergesehenen Berührungen, d.h. einem Crash kommen. Auf Grund der teilweise hohen wirkenden Kräfte kann dies zu Beschädigungen der Nadel oder des berührten Gegenstandes führen oder aber zu einer Verschleppung von Probenmaterial und damit einer Verfälschung von Tests.

Es ist daher erforderlich, derartige Crashs zu vermeiden. Das Pipettiersystem muss Crashs erkennen und gegebenenfalls die Bewegung beenden. In heutigen Geräten werden hierfür Mikroschalter verwendet. Die Pipettiernadel ist dabei üblicherweise selbstrückstellend beweglich z.B. über eine Feder an dem bewegbaren Element wie z.B. dem Transportarm befestigt. Kommt es zu einem Crash, wird die Pipettiernadel gegenüber dem bewegbaren Element angehoben. Der Mikroschalter ist dabei so angeordnet, dass er durch dieses Anheben ausgelöst wird, wodurch dann die Bewegung des Pipettiersystems angehalten wird.

Nachteilig an den bisher verwendeten Mikroschaltern ist ihre mechanische Empfindlichkeit und Ungenauigkeit. Durch äußere Einflüsse wie Feuchtigkeit und Erschütterung fallen diese oft aus. Weiterhin ist eine aufwändige manuelle Justage notwendig, d.h. mit Lehren muss die Justage von Hand eingestellt werden und durch umfangreiche Tests die Einstellung überprüft werden. Beim Tausch der Pipettiernadel oder Arbeiten in diesem Bereich muss die Schaltschwelle des Mikroschalters mechanisch justiert werden. Dies ist aufwändig und fehlerträchtig.

Der Erfindung liegt daher die Aufgabe zugrunde, ein Pipettiersystem mit einer an einem bewegbaren Element beweglich angeordneten Pipettiernadel bereit zu stellen, welches eine zuverlässigere und genauere Crash-Detektion ermöglicht und dabei besonders wartungsarm ist.

Diese Aufgabe wird erfindungsgemäß gelöst, gemäß Anspruch 1, indem einem Abstand zwischen Pipettiernadel und bewegbarem Element ein Bewegungsmesssystem zugeordnet ist. Dies hat den Vorteil, dass eine zuverlässigere und wartungsarme Crash-Detektion in einem Pipettiersystem möglich ist, wenn die bisher verwendeten Mikroschalter durch ein flexibleres System ersetzt werden. Dadurch dass einem Abstand zwischen Pipettiernadel und bewegbarem Element ein Bewegungsmesssystem zugeordnet ist, weist das System keinen definierten Auslösepunkt auf, der einer aufwändigen Justage und Einstellung bedarf. Hierbei muss das Bewegungsmesssystem keineswegs eine kontinuierlich korrekte absolute Größe für den Abstand ermitteln können, sondern eine einfache Feststellung einer relativen Änderung des Abstandes ist ausreichend. Durch eine Auslenkung aus der Ruhelage kann nämlich bereits eine Berührung der Pipettiernadel erkannt werden.

Gegenstand der vorliegenden Erfindung ist daher ein Pipettiersystem für ein automatisches Analysegerät gemäß der unabhängigen Ansprüche, welches eine Pipettiernadel umfasst, welche selbstrückstellend beweglich an einem bewegbaren Element des Pipettiersystems angeordnet ist und wobei einem Abstand zwischen Pipettiernadel und bewegbarem Element ein Bewegungsmesssystem zugeordnet ist. Verschiedene Konzepte wie z.B. optischer Art sind für das Bewegungsmesssystem denkbar. Erfindungsgemäß umfasst das Bewegungsmesssystem jedoch einen Hall-Sensor und einen Magneten. Dabei ist jeweils an einem der Bauteile des Pipettiersystems der Magnet, an dem anderen der Hall-Sensor angebracht. Eine Veränderung der relativen Position des Magneten zum Hall-Sensor bedingt eine Veränderung des erzeugten Magnetfeldes im Hall-Sensor und ermöglicht so eine Erkennung eines Kontakts der Pipettiernadel mit einer Oberfläche. Durch die selbstrückstellenden Eigenschaften eines Gelenkelements der Pipettiernadelhalterung ist der Magnet ohne eine Berührung der Pipettiernadel stets in derselben relativen Position zum Hall-Sensor, so dass hier stets dasselbe (Ruhelage-) Magnetfeld anliegt. Eine komplizierte Justierung ist somit nicht erforderlich. Es genügt eine einfache Einstellung auf das Signal des Hall-Sensors im berührungsfreien Zustand. Jede Veränderung dieses Signals bedeutet eine Berührung. Eine magnetische Bewegungssensorik hat zudem den Vorteil, dass sie besonders resistent gegen äußere Einflüsse durch elektromagnetische Felder von z.B. Mobiltelefonen ist.

In einer vorteilhaften Ausgestaltung ist der Magnet mit seiner Polachse auf den Hall-Sensor ausgerichtet. Dies verbessert die Empfindlichkeit und damit die

Ansprechgeschwindigkeit des Systems weiter, da durch die Ausrichtung der Polachse auf den Hall-Sensor bei einer Auslenkung des Magneten eine maximale Veränderung des Magnetfeldes im Hall-Sensor erreicht wird. Das Signal des Hall-Sensors wird damit bei einem Crash stärker und ist schneller detektierbar. Vorteilhafterweise ist der Hall-Sensor an dem bewegbaren Element und der Magnet an der Pipettiernadel angeordnet. Grundsätzlich ist der Aufbau zur Abstandsmessung zwar symmetrisch austauschbar. Allerdings ist der Magnet lediglich ein passives Element, während der Hall-Sensor das aktive, signalproduzierende Element darstellt. Da die Signale ohnehin über das bewegliche Element und dessen Antrieb in die Steuereinheit geleitet werden, verkürzt eine derartige Anbringung die Signalwege und vereinfacht die Konstruktion. In weiterer vorteilhafter Ausgestaltung umfasst der Magnet eine Neodymverbindung. Insbesondere Legierungen aus Neodym, Eisen und Bor bilden extrem starke Dauermagnete mit hoher Remanenz, die sich für die Anwendung in Pipettiersystemen besonders eignen. Durch die Verwendung von Neodymverbindungen wird es ermöglicht, ein besonders starkes Magnetfeld für eine besonders gute und schnelle Bewegungsdetektion auf kleinstem Raum zur erzeugen. Dadurch kann die Crash-Detektion auch besonders platzsparend realisiert werden.

Erfindungsgemäß umfasst das Pipettiersystem ein mit dem Bewegungsmesssystem verbundenes Auswertesystem, welches dafür ausgelegt ist, bei einer Veränderung des Signals des Bewegungsmesssystems ein Berührungssignal an eine dem bewegbaren Element zugeordnete Steuereinheit auszugeben. Dieses Signal wird in der Steuereinheit des bewegbaren Elements, z.B. des Transferarms verarbeitet und führt dort unter Umständen zu einem sofortigen Anhalten des Transferarms. Lediglich in Fällen, in denen die Steuereinheit ein geplantes Aufsetzen der Pipettiernadel durchführt, beispielsweise beim planmäßigen Durchstoßen der Deckel von Blutentnahmeröhrchen, wird das Berührungssignal des Auswertesystems von der Steuereinheit ignoriert. Das Bewegungsmesssystem ist damit bedarfsweise deaktivierbar.

Erfindungsgemäß ist die Veränderung des Signals, bei der ein Anhalten des Transferarms veranlasst wird, größer als eine vorgegebene Mindestveränderung. Dem Signal wird somit ein vorgegebener Schwellwert oder ein entsprechendes Intervall zugeordnet. Eine solche Vorrichtung, die Magneten und einen Hall-Sensor umfasst, wird beschrieben in Dokument WO2012/119118. Liegt die Signalveränderung unterhalb des Schwellwerts bzw. innerhalb des Intervalls, wird noch kein Berührungssignal ausgegeben. Hierdurch können Fehlsignale durch kleine äußere Störungen wie z.B. externe Magnetfelder oder Fluktuationen aufgrund von z.B. Temperaturschwankungen vermieden werden.

Erfindungsgemäß wird durch die Masseträgheit der Pipettiernadel eine Signalveränderung entstehen, da diese beweglich gelagert ist. Bei einer Bewegung des Transportarms, d.h. des bewegbaren Elements, an dem die Pipettiernadel beweglich gelagert ist, kann durch die Masseträgheit der Nadel je nach Rückstellkraft der Lagerung eine Bewegung in die umgekehrte Richtung erfolgen. Daher ist das Pipettiersystem derart ausgelegt, dass die durch eine betriebsgemäße Bewegung des beweglichen Elements verursachte Abstandsveränderung eine Veränderung des Signals hervorruft, die kleiner als die vorgegebene Mindestveränderung ist. Insbesondere ist hierbei die Lagerung so ausgelegt, d.h. sie weist eine so hohe Rückstellkraft auf, dass bei den typischerweise auftretenden Beschleunigungen des Transportarms keine oder nur eine geringe Auslenkung durch die Masseträgheit der Nadel zu erwarten ist, die nur eine Signaländerung auslöst, die unterhalb des Schwellwertes liegt.

Für den Fall einer magnetischen Bewegungsmessung mit einem Hall-Sensor ist die vorgegebene Mindestveränderung weiterhin größer als ein dem Hall-Sensor zugeordnetes Hysteresesignal. Wird die Nadel nämlich ausgelenkt, beispielsweise durch das planmäßige Durchstoßen des Deckels eines Blutentnahmeröhrchens, und kehrt anschließend wieder in die Ruhelage zurück, entspricht das Signal des Hall-Sensors auf Grund der Hysterese unter Umständen nicht mehr dem Ruhesignal vor dem Durchstoßen. Ist die Veränderung des neuen Ruhesignals gegenüber dem alten Ruhesignal größer als die vorgegebene Mindestveränderung, wird trotz der Ruhelage der Nadel ein Berührungssignal ausgelöst. Um dies zu vermeiden, sollte daher die vorgegebene Mindestveränderung größer sein als das entsprechende Hysteresesignal, d.h. die maximal durch Hysterese auslösbare Veränderung des Ruhesignals. Sollte nach dem Durchstoßen des Deckels eines Blutantnahmeröhrchens die Position des Ruhesignals außerhalb der Hysterese liegen, so kann einfach eine erneute Selbstkalibrierung durchgeführt werden.

Ein weiterer Gegenstand der vorliegenden Erfindung ist ein automatisches Analysegerät umfassend ein erfindungsgemäßes Pipettiersystem.

Die mit der Erfindung erzielten Vorteile bestehen insbesondere darin, dass durch die selbstrückstellende Lagerung der Pipettiernadel in Verbindung mit einer relativen Bewegungsmessung zum Lager im Transportarm insbesondere durch einen Permanentmagneten in Verbindung mit einer Hall-Sonde eine besonders empfindliche und gleichzeitig wartungsarme Detektion eines unvorhergesehenen Crashs der Pipettiernadel ermöglicht wird. Dabei ist keine umständliche manuelle mechanische Justage erforderlich, da das System auf jede Veränderung des Magnetfelds anspricht und die Ruhelage automatisch mit einem gegebenen Signal des Hall-Sensors identifiziert werden kann, d.h. eine Selbstkalibrierung möglich ist. Weiterhin kann so prinzipiell das Vorhandensein einer Pipettiernadel im System erkannt werden, da ohne Magnet kein gültiges Ruhesignal vorhanden ist. Durch den Entfall der Justage wird das System auch erheblich kostengünstiger im Betrieb. Durch die Einrichtung regelmäßiger Selbsttests kann auch eine regelmäßige Sichtprüfung entfallen.

Die Erkennung eines Crashs ist zudem, abhängig von der Lagerung der Pipettiernadel, in alle drei Bewegungsachsen möglich, da die Raumrichtung der Bewegung für die Detektion unerheblich ist. Bei den bisherigen mechanischen Schaltern war nur eine Detektion in eine vorgegebene Bewegungsrichtung möglich. Die Empfindlichkeit der Detektion ist ebenfalls im Gegensatz zum digitalen Signal eines mechanischen Schalters beliebig einstellbar und dynamisch änderbar. Letztlich wird die Prozesssicherheit erhöht, und die rechtzeitige Erkennung eventueller Schäden an der Pipettiernadel ist gewährleistet.

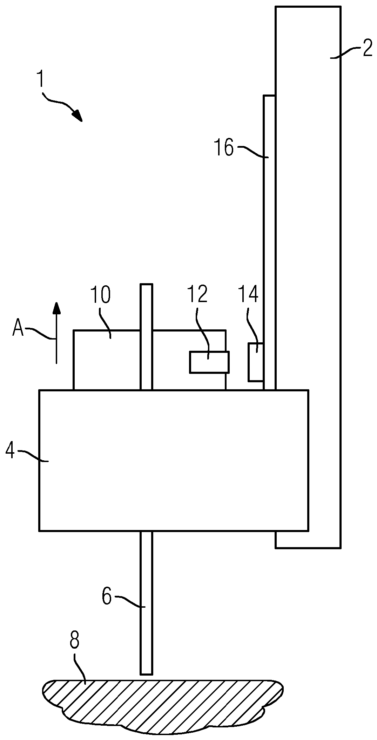

Die Erfindung wird anhand einer Zeichnung näher erläutert. Darin zeigt die Figur eine schematische Darstellung eines Pipettiersystems in einem automatischen Analysegerät.

Die Figur zeigt eine schematische Darstellung eines Pipettiersystems 1 in einem nicht dargestelltenautomatischen Analysegerät. Das Pipettiersystem 1 umfasst als bewegbares Element 2 einen Transferarm, welcher durch einen nicht näher dargestellten Antrieb frei bewegt werden kann. Die Bewegung des bewegbaren Elements 2 wird von einer ebenfalls nicht näher dargestellten Steuereinheit gesteuert. Am Antrieb befinden sich entsprechende Sensoren, die der Steuereinheit Informationen über die aktuelle Stellung des Antriebs liefern.

An einer an dem bewegbaren Element 2 fest installierten Halterung 4 ist eine Pipettiernadel 6 gelagert. Die Pipettiernadel 6 ist als Hohlnadel ausgestaltet. An ihrem oberen Ende ist ein mit Druck oder Unterdruck beaufschlagbarer, nicht näher dargestellter Schlauch angeordnet, mit dem ein Sog oder Druck am spitzenseitigen Hohlnadelaustritt erzeugt werden kann, so dass mit der Pipettiernadel 6 automatisiert Flüssigkeitsmengen entnommen und abgegeben werden können. Die Steuerung der Druckbeaufschlagung übernimmt ebenfalls die Steuereinheit.

Im Normalbetrieb werden je nach Einsatzzweck der Pipettiernadel 6 beispielsweise Probenaliquots aus Probenröhrchen oder Teilmengen von Reagenzien aus Reagenzbehältern entnommen, indem gegebenenfalls der Deckel der entsprechenden Gefäße mit der Pipettiernadel 6 durchstoßen und der Hohlraum der Pipettiernadel 6 mit Unterdruck beaufschlagt wird. Die Pipettiernadel 6 wird dann von der Steuereinheit gesteuert beispielsweise zu einer Küvette geführt, wo die entnommene Menge der Flüssigkeit abgegeben wird. Hier werden entsprechende Analysen durchgeführt. Anschließend wird die Pipettiernadel 6 in eine Spüleinrichtung geführt, wo sie gereinigt wird. Die Pipettiernadel 6 ist dann für einen neuen Arbeitszyklus bereit.

Um eine Beschädigung der Pipettiernadel 6 oder eines anderen Gegenstands bei den komplexen Bewegungsabläufen in dem automatischen Analysegerät zu vermeiden, ist es wichtig, einen Crash der Pipettiernadel 6 an einer Oberfläche 8 zuverlässig zu erkennen und das bewegbare Element 2 unverzüglich anzuhalten. Hierfür ist die Pipettiernadel 6 in der Halterung 4 selbstrückstellend beweglich gelagert, beispielsweise mittels Federn oder in einer Gummilagerung. Dadurch wird eine mehrdimensionale Beweglichkeit von Halterung 4 und Pipettiernadel 6 gegeneinander gewährleistet, wobei diese sich jedoch selbstständig in die Ruheposition zurückstellen. Die genannten Bauteile sind dabei so ausgelegt, dass die Rückstellkraft stets so groß ist, dass die durch die betriebsgemäße Bewegung verursachte Beschleunigungskraft keine nennenswerte Auslenkung aus der Ruheposition verursacht, sondern für eine Auslenkung ein tatsächlicher Crash erforderlich ist.

An dem von der Spitze entfernten Ende der Pipettiernadel 6 ist in einer Halterung 10 ein Magnet 12 angeordnet. Die Halterung 10 ist aus Kunststoff gefertigt und fest mit der Pipettiernadel 6 verbunden, so dass sie jede Bewegung der Pipettiernadel 6 mitmacht. Der Magnet 12 ist ein aus einer Neodym-Eisen-Bor-Verbindung gefertigter Permanentmagnet.

Dem Magneten 12 ist im gegenüberliegenden Bereich auf dem bewegbaren Element 2 ein Hall-Sensor 14 auf einer als Leiterplatte ausgebildeten Auswerteeinheit 16 zugeordnet. Die Polachse des Magneten 12 ist dabei direkt auf den Hall-Sensor 14 gerichtet. Der Hall-Sensor 14 detektiert Änderungen der Relativposition zum Magneten 12 in jede Richtung durch die Änderung des magnetischen Feldes und leitet diese Information der Auswerteeinheit 16 zu. Magnet 12 und Hall-Sensor 14 bilden somit ein Bewegungsmesssystem.

Trifft nun im laufenden Betrieb auf Grund eines unvorhergesehenen Ereignisses die Spitze der Pipettiernadel 6 auf eine Oberfläche 8, führt die Pipettiernadel 6 auf Grund der bewegbaren Lagerung an der Halterung 4 eine Ausweichbewegung A aus. In Ruheposition haben der Magnet 12 und der Hall-Sensor 14 einen bestimmten Abstand. Die Ausweichbewegung A der Pipettiernadel 6 führt zu einer Veränderung dieses Abstandes. Dadurch ändert sich die vom Hall-Sensor 14 gemessene Magnetfeldstärke.

Die Auswerteeinheit 16 überwacht das Signal des Hall-Sensors 14 kontinuierlich auf Änderungen. Sie kann dabei sowohl digital als auch analog ausgelegt sein. Im Ausführungsbeispiel ist die Auswerteeinheit 16 ebenfalls für die Überwachung des Eintauchens der Pipettiernadel 16 in eine Flüssigkeit ausgelegt, so dass die Funktionen der Crash-Detektion und der Flüssigkeitshöhenerfassung platzsparend direkt integriert sind. Auch die Integration des Hall-Sensors 14 direkt auf der Auswerteeinheit 16 bietet gegenüber einem diskret montierten Sensor erhebliche Kostenvorteile.

Bei der Inbetriebnahme kann die Auswerteeinheit 16 zunächst das prinzipielle Vorhandensein eines Magneten 12, d.h. einer Pipettiernadel 6 detektieren. Zunächst wird eine automatische Kalibrierung durchgeführt, indem das aktuelle Signal des Hall-Sensors 14 mit der Pipettiernadel 6 in Ruhelage als Ruhesignal gespeichert wird. Die Kalibrierung kann zudem in regelmäßigen Abständen während des Betriebs automatisiert neu durchgeführt werden. Hierfür sind bestimmte Lagen des Transferarms vorgegeben, in denen ein Crash ausgeschlossen ist und die Pipettiernadel 6 sich in der Ruhelage befindet. Durch eine regelmäßige Neukalibrierung in diesen Lagen werden Fehlalarme minimiert.

In der Auswerteeinheit 16 ist eine Mindestveränderung des Signals des Hall-Sensors 14 voreingestellt. Diese kann bedarfsweise eingestellt werden. Sobald das Signal des Hall-Sensors 14 um mehr als die Mindestveränderung vom gespeicherten Ruhesignal abweicht, wird ein Berührungssignal an die übergeordnete Steuereinheit gesendet. Die Mindestveränderung ist dabei so eingestellt, dass sie größer als eine durch Hysterese im Hall-Sensor 14 hervorrufbare Veränderung ist.

Erreicht ein Berührungssignal die Steuereinheit, wird von der Steuereinheit zunächst ausgewertet, ob eine planmäßige Berührung derzeit stattfindet, z.B. ein Durchstoßen eines Deckels eines Blutentnahmeröhrchens. Dies kann z.B. durch Abgleich mit Positionsdaten des Antriebs des beweglichen Elements 2 geschehen. Wird die Berührung als planmäßig erkannt, wird das System deaktiviert, und es wird fortgefahren. Andernfalls wird der Antrieb des beweglichen Elements 2 sofort angehalten. Typischerweise kann so ein Anhalten innerhalb von 2 mm nach dem Erkennen einer Berührung gewährleistet werden.

### BEZUGSZEICHENLISTE

- 1: Pipettiersystem
- 2: bewegbares Element
- 4: Halterung
- 6: Pipettiernadel
- 8: Oberfläche
- 10: Halterung
- 12: Magnet
- 14: Hall-Sensor
- 16: Auswerteeinheit

- A: Ausweichbewegung

## Patentansprüche

1. Pipettiersystem (1) für ein automatisches Analysegerät, das Pipettiersytem (1) umfassend eine Pipettiernadel (6), welche selbstrückstellend beweglich an einem bewegbaren Element (2) des Pipettiersystems (1) angeordnet ist, wobei einem Abstand zwischen Pipettiernadel (6) und bewegbarem Element (2) ein Bewegungsmesssystem (12, 14) zugeordnet ist, das Pipettiersytem (1) ferner umfassend ein mit dem Bewegungsmesssystem (12, 14) verbundenes Auswertesystem (16), welches dafür ausgelegt ist, bei einer Veränderung des Signals des Bewegungsmesssystems (12, 14), die größer als eine vorgegebene Mindestveränderung ist, ein Berührungssignal an eine dem bewegbaren Element (2) zugeordnete Steuereinheit auszugeben, wobei das Pipettiersystem (1) derart ausgelegt ist, dass die durch Massenträgheit bei einer betriebsgemäßen Bewegung des beweglichen Elements (2) verursachte Abstandsveränderung eine Veränderung des Signals hervorruft, die kleiner als die vorgegebene Mindestveränderung ist, wobei das Bewegungsmesssystem (12, 14) einen Hall-Sensor (14) und einen Magneten (12) umfasst, wobei entweder der Hall-Sensor (14) an dem bewegbaren Element (2) und der Magnet (12) an der Pipettiernadel (6) oder der Magnet (12) an dem bewegbaren Element (2) und der Hall-Sensor (14) an der Pipettiernadel (6) angeordnet ist.

2. Pipettiersystem nach Anspruch 1, bei dem der Magnet (12) mit seiner Polachse auf den Hall-Sensor (14) ausgerichtet ist.

3. Pipettiersystem nach einem der Ansprüche 1 oder 2, bei dem der Magnet (12) eine Neodymverbindung umfasst.

4. Pipettiersystem (1) nach einem der vorhergehenden Ansprüche, bei dem die vorgegebene Mindestveränderung größer als ein dem Hall-Sensor (14) zugeordnetes Hysteresesignal ist.

5. Automatisches Analysegerät mit einem Pipettiersystem (1) nach einem der vorhergehenden Ansprüche.

## Claims

1. Pipetting system (1) for an automatic analyser, the pipetting system (1) comprising a pipetting needle (6) which is arranged movably, with self-resetting, on a movable element (2) of the pipetting system (1), wherein a movement-measuring system (12, 14) is assigned to a distance between pipetting needle (6) and movable element (2), the pipetting system (1) further comprising an evaluation system (16) connected to the movement-measuring system (12, 14), which evaluation system (16) is designed to transmit a contact signal to a control unit, assigned to the movable element (2), upon a change in the signal of the movement-measuring system (12, 14) that is greater than a predefined minimum change, wherein the pipetting system (1) is designed in such a way that the change in distance caused by inertia in an operational movement of the movable element (2) brings about a change in the signal that is less than the predefined minimum change, wherein the movement-measuring system (12, 14) comprises a Hall sensor (14) and a magnet (12), wherein either the Hall sensor (14) is arranged on the movable element (2) and the magnet (12) on the pipetting needle (6), or the magnet (12) is arranged on the movable element (2) and the Hall sensor (14) on the pipetting needle (6).

2. Pipetting system according to Claim 1, in which the magnet (12) is aligned with its polar axis on the Hall sensor (14).

3. Pipetting system according to either of Claims 1 and 2, in which the magnet (12) comprises a neodymium compound.

4. Pipetting system (1) according to one of the preceding claims, in which the predefined minimum change is greater than a hysteresis signal assigned to the Hall sensor (14).

5. Automatic analyser having a pipetting system (1) according to one of the preceding claims.

## Revendications

1. Système (1) de pipetage d'un appareil d'analyse automatique, le système (1) comprenant une aiguille (6) de pipetage, qui est montée mobile avec rappel automatique sur un élément (2) mobile du système (1) de pipetage, dans lequel à une distance entre l'aiguille (6) de pipetage et l'élément (2) mobile est associé un système (12, 14) de mesure du déplacement, le système (1) de pipetage comprenant en outre un système (16) d'exploitation, qui est relié au système (12, 14) de mesure du déplacement et qui est conçu pour, s'il se produit une modification du signal du système (12, 14) de mesure du déplacement, qui est plus grande qu'une modification minimum donnée à l'avance, envoyer un signal de contact à une unité de commande associée à l'élément (2) mobile, dans lequel le système (1) de pipetage est conçu de manière à ce que la variation de distance provoquée par l'inertie de masse, lors d'un déplacement conforme au fonctionnement de l'élément (2) mobile, donne une modification du signal, qui est plus petite que la modification minimum donnée à l'avance, dans lequel
le système (12, 14) de mesure du déplacement comprend un capteur (14) de Hall et un aimant (12), dans lequel
ou bien le capteur (14) de Hall est monté sur l'élément (2) mobile et l'aimant (12) sur l'aiguille (6) de pipetage, ou bien l'aimant (12) est monté sur l'élément (2) mobile et le capteur (14) de Hall sur l'aiguille (6) de pipetage.

2. Système de pipetage suivant la revendication 1, dans lequel l'axe polaire de l'aimant (12) est dirigé sur le capteur (14) de Hall.

3. Système de pipetage suivant l'une des revendications 1 ou 2, dans lequel l'aimant (12) comprend un composé au néodyme.

4. Système (1) de pipetage suivant l'une des revendications précédentes, dans lequel la modification minimum donnée à l'avance est plus grande qu'un signal d'hystérésis associé au capteur (14) de Hall.

5. Appareil d'analyse automatique ayant un système (1) de pipetage suivant l'une des revendications précédentes.
